# EUROPEAN PATENT SPECIFICATION

(11) **EP 1 499 107 B1**
(45) Date of publication and mention of the grant of the patent: **04.09.2013**
(21) Application number: 04254220.9
(22) Date of filing: 14.07.2004
(51) Int. Cl.: H04N 1/44

(54) **Image processing apparatus**
Bildverarbeitungsvorrichtung
Appareil de traitement d'image

(30) Priority: 15.07.2003 JP 2003197416
(43) Date of publication of application: 19.01.2005
(73) Proprietor: Ricoh Company, Ltd., Tokyo 143-8555 (JP)
(72) Inventor: Tamura, Hiroshi, Yokohama-shi, Kanagawa (JP)
(74) Representative: Leeming, John Gerard

(56) References cited:
- EP-A2- 0 194 839
- EP-A2- 0 671 830
- US-A1- 2002 039 419

## Description

The present invention relates to an image processing apparatus, a transmission/received data processing method, a transmission/received data processing program and a computer readable information recording medium, and, in particular, to an image processing apparatus, a transmission/received data processing method, a transmission/received data processing program including encoding and decoding processing, and a computer readable information recording medium storing such a program.

Thanks to recent spread of a communication network such as the Internet, various types of apparatus are connected with the network. As a result, it becomes possible to share hardware resources, software resources and data.

For example, an image processing apparatus which is one example of an apparatus connected with the network receives printing data from a personal computer (simply referred to as a PC, hereinafter) which is also connected with the network, and performs printing out of the printing data. Other than printing data, an ID, a password, account data or such is sent/received between the image processing apparatus and the PC.

However, data being transmitted by the network may be easily tapped or tampered by a person who has a certain level of skill for the network technology. For example, printing data, an ID, a password or such flowing through the network can be easily tapped with the use of some sort of an analyzer connected with the network. A person who thus tapped printing data can easily recognize the contents of the printing data. A person who tapped the password can perform so-called spoofing. Also, there is a risk that account data flowing through the network may be tampered.

Accordingly, needs increase to mount a security function such as encoding function to such an apparatus connected with the network. In such a situation, a security function, merely mounted on a special machine or a custom-made machine conventionally so far, has come to be mounted also on software of a PC, an image processing apparatus, a communication apparatus or such recently.

Japanese Laid-open Patent Application No. 8-290639 discloses a machine in which a security module having such a security function is directly incorporated.

However, such a machine in which a security function is directly incorporated may frequently be subject to export restriction or sales restriction. In fact, for a machine having a security module having a security function build therein, export destination countries may be limited due to such export restriction or sales restriction.

For example, assuming that export of a machine having a security module having a security function with an encoding strength of 56 bits is allowed for a country 'A' while export of a machine having a security module having a security function with an encoding strength of 512 bits is allowed for a country 'B', a machine having a security module having a security function with an encoding strength of 512 bits prepared to be exported to the country 'B' cannot be exported to the country 'A'.

In other words, for a machine in which a security module having a security function is directly built, a plurality of versions, such as one having no such a security module built therein, ones having security modules of security strengths such as encoding strengths different from each other respectively or such, should be prepared, in consideration of such export restriction or sales restriction.

Furthermore, such a security function is being developed day by day, and thus, existing security modules erode every year. Accordingly, it is necessary to replace such an eroded security module with a new security module having an advanced function. However, for a machine in which such a security module is directly built, it is not easy to replace the security module.

EP 0 671 830 A2 discloses a secure facsimile device in which a smart card is used to store keys and to perform decryption of data.

WO 99/35647 discloses a system and method for copy protection of audio/visual signals using a "descrambler" provided in a detachable module.

The present invention has been devised in consideration of these problems, and an object of the present invention is to enable easy handling of a plurality of different security strengths, and also, easy updating of a security function part.

In order to achieve the above-mentioned object, the present invention provides a system of secure image data transmission or reception, a method for processing transmission or received data and a program for processing transmission and received data as defined in the appended claims.

According to another aspect of the present invention, a computer readable information recording medium stores therein the transmission/received data processing program mentioned above.

According to the present invention, as described above, a security part is stored in an external recording medium, and a connecting part which enables connection of the external recording medium with the recording medium is provided. Accordingly, since the security part is recorded in the external recording medium, it is easy to handle a plurality of different security strengths by replacing the recording medium storing therein the security part, and also, to update the security part easily in a flexible manner.

As the above-mentioned external recording medium, various types of recording media can be applied, for example, a recording medium in which information is recorded optically, electrically or magnetically such as a CD-ROM, a flexible disk, a magneto-optical disk (MO), or such, or a semiconductor memory in which information is electrically recorded such as a ROM, a flash memory, or such.

Other objects and further features of the present invention will become more apparent from the following detailed description of exemplary embodiments when read in conjunction with the following accompanying drawings, in which:
FIG. 1 shows a configuration of a fusion machine according to one embodiment of the present invention;
FIG. 2 shows a hardware configuration of the fusion machine according to the embodiment of the present invention;
FIG. 3 shows a configuration of one example of an external storage medium according to the present invention;
FIG. 4 illustrates one example of processing performed by the fusion machine and the external storage medium;
FIG. 5 shows a memory map representing one example of an address space in the fusion machine;
FIG. 6 shows a hierarchy structure in one example of software in a case of TCP/IP;
FIG. 7 shows a flow chart of one example of transmission data processing performed by the fusion machine;
FIG. 8 shows an image of one example of a transmission check page;
FIG. 9 shows an image of one example of an encoding check page;
FIG. 10 shows a flow chart of one example of transmission data processing including encoding processing;
FIG. 11 shows a flow chart of one example of transmission data processing not including encoding processing;
FIG. 12 shows a configuration of one example of an API used for performing the transmission data processing;
FIG. 13 shows a flow chart of one example of received data processing performed by the fusion machine;
FIG. 14 shows a sequence diagram of one example of SSL communication performed between the fusion machine and a communication counterpart; and
FIGS. 15 and 16 show a sequence diagram performed by the fusion machine in a case of SSL communication.

### DETAILED DESCRIPTION OF THE PREFERRED EMBODIMENT

An embodiment of the present invention will now be described with reference to figures. Although description is made for an image processing apparatus in which functions of respective apparatuses such as a printer, a copy machine, a facsimile machine, a scanner and so forth are accommodated in a single common housing, the present invention may also be applied to any other type of an image processing apparatus in the same manner.

Further, the image processing apparatus according to the embodiment of the present invention is such that, a display part, a printing part, an image pickup part and so forth are provided in the single common housing, four types of software for the respective functions of the printer, copy machine, facsimile machine and scanner are provided, and, by switching among these types of software, the image processing apparatus can be used as the relevant one of the printer, copy machine, facsimile machine and scanner. Such a type of image processing apparatus is referred to as a 'fusion machine' hereinafter.

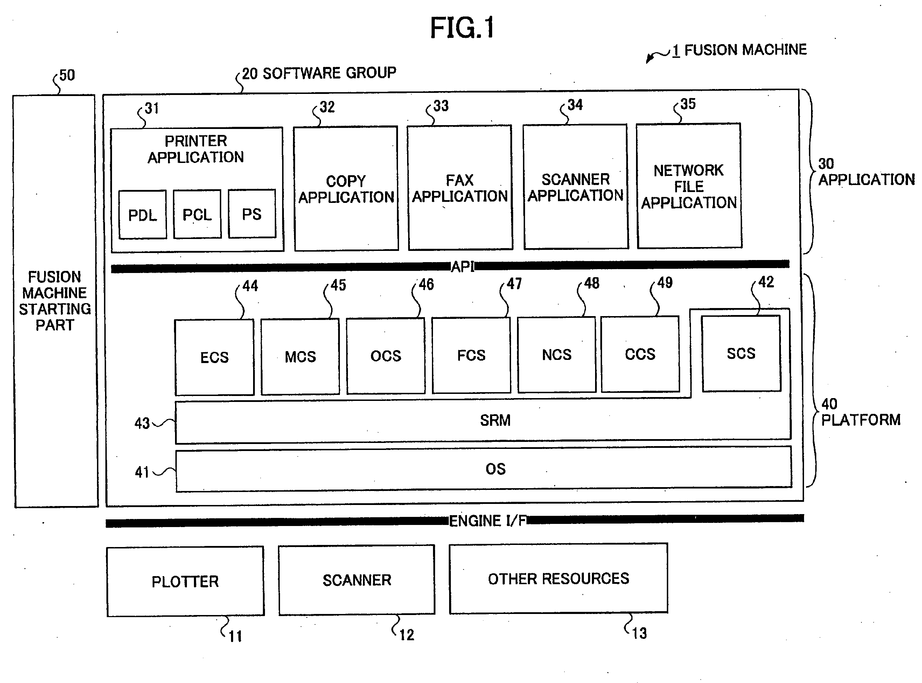

FIG. 1 shows a configuration of the fusion machine in the embodiment of the present invention. This fusion machine 1 includes a plotter 11, a scanner 12, other hardware resources 13 such as a facsimile device and so forth, a group of various types of software 20, and a fusion machine starting part 50. The group of software 20 includes applications 30 and a platform 40.

The applications 30 are provided for executing processing unique to respective ones of user services concerning image forming processing such as those of the printer, copy machine, facsimile machine, scanner and so forth. The applications 30 include a printer application 31 for the function of the printer having a page description language (PDL, PCL) and a postscript (PS); a copy application 32 for the copy function; a facsimile application 33 for the facsimile function; a scanner application 34 for the scanner function; and a network file application 35 for handling so-called network files.

The platform 40 includes control services interpreting various types of processing requests given by the applications 30 and generating acquisition requests for hardware resources; a system resource manager (referred to as an SRM, hereinafter) 43 performing management of one or more hardware resources and arbitration among the acquisition requests given by the control services; and an operating system (referred to as an OS, hereinafter) 41.

The control services include service modules such as a system control service (referred to as a SCS, hereinafter) 43, an engine control service (referred to as an ECS, hereinafter) 44, a memory control service (referred to as a MCS, hereinafter) 45, an operation control service (referred to as an OCS, hereinafter) 46, a facsimile control service (referred to as an FCS, hereinafter) 47, a network control service (referred to as an NCS, hereinafter) 48, a security control service (referred to as a CCS, hereinafter) 49 and so forth.

The platform 40 is configured to have application program interfaces (referred to as APIs, hereinafter) which enable reception of processing requests from the applications 30 by means of functions previously defined. The OS 41 is a UNIX (registered trademark) or such, regards respective software of the platform 40 and the applications 30 as respective processes, and executes them in parallel.

A process of the SRM 43 is used for, together with the SCS 42, performing system control and hardware management. For example, the process of the SRM 43 performs arbitration according to requests given by an upper layer which uses hardware resources, and controls execution of the requests.

Specifically, the SRM 43 determines whether or not a hardware recourse requested is available (whether or not it is already used by another request), and, when it is available, the SRM 43 notifies the upper layer that the requested resource is available. Further the SRM 43 executes scheduling for utilizing hardware resources in response to requests given from the upper layer, and executes directly the contents requested (for example, paper feeding and image forming operation in the printer engine, memory acquisition, a file generation, or such).

A process of the SCS 42 is used for performing application management, control of an operation part, display of a system page, display with LED, hardware resource management, control of interrupt application and so forth. A process of the ECS 44 is used for controlling engines such as the plotter 11, the scanner 12, the hardware resources 13 or such.

A process of the MCS 45 is used for controlling memories such as acquisition and release of a memory, image compression or decompression, or such. A process of the OCS 46 is used for controlling the operation panel which is used for communication between an operator (person) and a body control part of the fusion machine itself.

A process of the FCS 47 is used for providing an API for performing facsimile transmission/reception with the use of PSTN or ISDN from each application layer of the system controller, registration/citation of various types of facsimile data managed in a backup memory, facsimile reading, facsimile receiving, printing or such.

A process of the NCS 48 is used for providing, to applications which require network I/O, services which can be shared thereamong, and for acting as an agent to distribute data received according to respective protocols from the network to the respective applications, or transmit data from the respective applications to the network.

A process of the CCS 49 provides a security service to the applications. The fusion machine starting part 50 is executed first when a power supply to the fusion machine 1 is started, and then starts up the platform 40 and the applications 30.

The fusion machine 1 can unify management of processing requested in common by the respective applications in the platform 40. A hardware configuration of the fusion machine 1 is described next.

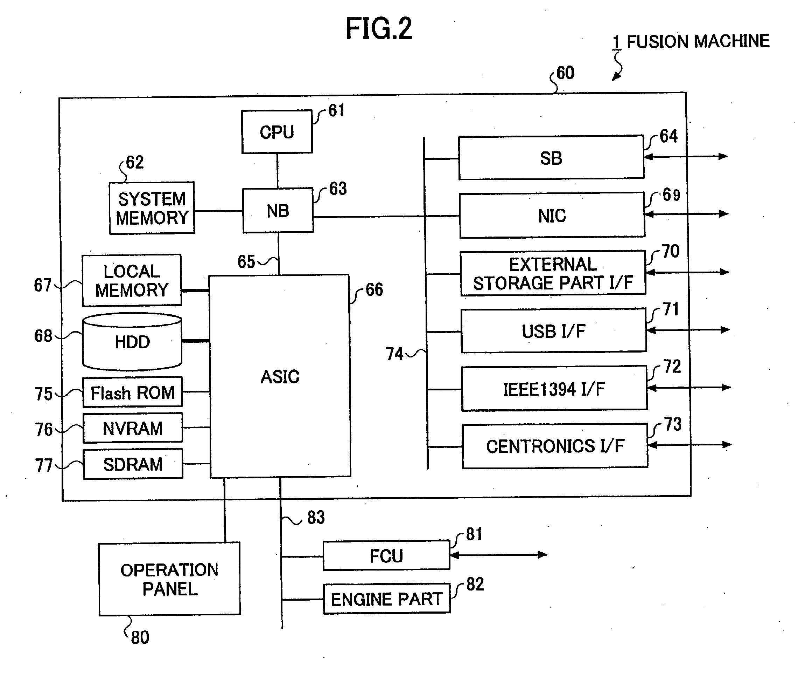

FIG. 2 shows a hardware configuration of the fusion machine 1 described above. The fusion machine 1 includes a controller 60, the operation panel 80, an FCU 81, and the engine part 82.

The controller 60 includes a CPU 61, a system memory 62, a north bridge (NB) 63, a south bridge (SB) 64, an ASIC 66, a local memory 67, a HDD 68, a network interface card (NIC) 69, an external storage medium I/F 70, an USB I/F 71, an IEEE1394 I/F 72, a centronics I/F 73, a flash ROM 75, an NVRAM 76 and an SDRAM 77.

The operation panel 80 is connected with the ASIC 66 of the controller 60. The FCI 81 and the engine part 82 are connected with the ASIC 66 via a PCI bus 83.

The controller 60 has a configuration such that the local memory 67, the HDD 68, the flash ROM 75, the NVRAM 76, the SDRAM 77 and so forth are connected to the ASIC 66, and also, the CPU 61 and the ASIC 66 are connected together by means of the NB 63 which is a CPU chip set. The controller 60 is configured such that the CPU 61 and the ASIC 66 are connected together by means of the NB 63, so that the configuration is operable even in a case where an interface of the CPU 61 is not disclosed.

The ASIC 66 and the NB 63 are connected together by means of an AGP (accelerated graphics port) 65. By applying such a high-rate port for connecting the ASIC 66 and the NB 63 together instead of a low-rate bus such a PCI bus, degradation in the performance can be avoided effectively.

The CPU 61 controls the entirety of the fusion machine 1. The CPU 61 starts up and executes the SCS 42, SRM 43, ECS 44, MCS 45, OCS 46, FCS 47, NCS 48 or CCS 49 on the OS 41 in a form of a process, and also, starts up and executes the printer application 31, copy application 32, facsimile application 33, scanner application 34 or network file application 35 included in the applications 30.

The NB 63 is a bridge for connecting the CPU 61, system memory 62, SB 64, ASIC 66, NIC 69, external storage medium I/F 70, USB I/F 71, IEEE1394 I/F 72 and centronics I/F 73 together.

The SB 64, NIC 69, external storage medium I/F 70, USB I/F 71, IEEE1394 I/F 72 and centronics I/F 73 are connected with the NB 63 via the PCI bus 74. The SB 64 is a bridge for connecting the PCI bus 74 with ROMs, peripheral devices or such.

The system memory 62 is a memory used as a drawing memory or such in the fusion machine 1. The local memory 67 is used as a copying image buffer, a code buffer or such.

The ASIC 66 is provided for the purpose of image processing and includes hardware elements prepared for image processing. The HDD 68 is one example of storage (auxiliary storage) for storing image data, document data, programs, font data, various types of forms, or such.

The NIC 69 is an interface device for connecting the fusion machine 1 to the communication network. The external storage medium I/F 70 has a configuration such that an external storage medium (carriable external recording medium) may be loaded therein or unloaded therefrom, and is an interface conforming to a relevant type of an external storage medium actually applied. For example, an SD card, a compact flash (registered trademark), a ROM-DIMM or such may be applied as the external storage medium.

The USB I/F 71, IEEE1394 I/F 72 and centronics 1/F 73 are interfaces conforming to the respective standards. The flash ROM 75 is a memory for storing programs or data externally. The NVRAM 76 and SDRAM 77 are memories having functions of holding information even in a condition in which power supply thereto is broken.

The operation panel 80 accepts input operation performed by an operator (person), and also, provides necessary display to the operator. The FCU 81 has a memory. The memory which the FCU 81 has is used for temporarily storing facsimile data received when the power supply to the fusion machine 1 is broken.

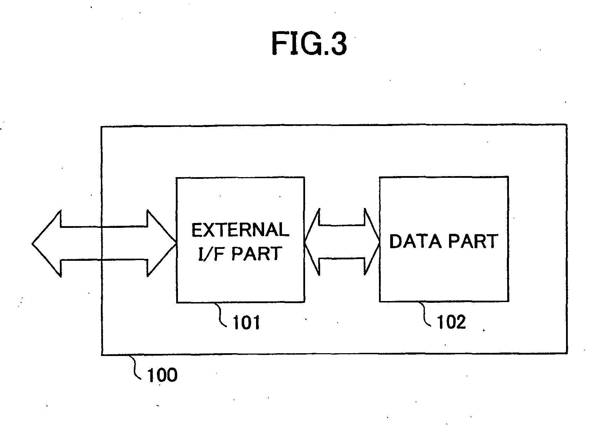

FIG. 3 shows a hardware configuration of the external storage medium in one example according to the present invention. The external storage medium 100 includes an external I/F part 101 and a data part 102. The data part 102 is made of a ROM, an NVRAM, a flash ROM or such, and, may be one for which data writing can be performed only once, one for which data is written at any time, one for which only reading out therefrom can be performed or such.

In the data part 102, a security module, data used by the security module or such is stored as an example of a security part. The data part 102 is connected with the external storage part I/F 70 shown in FIG. 2 via the external I/F part 101 when it is loaded in the external storage part I/F 70.

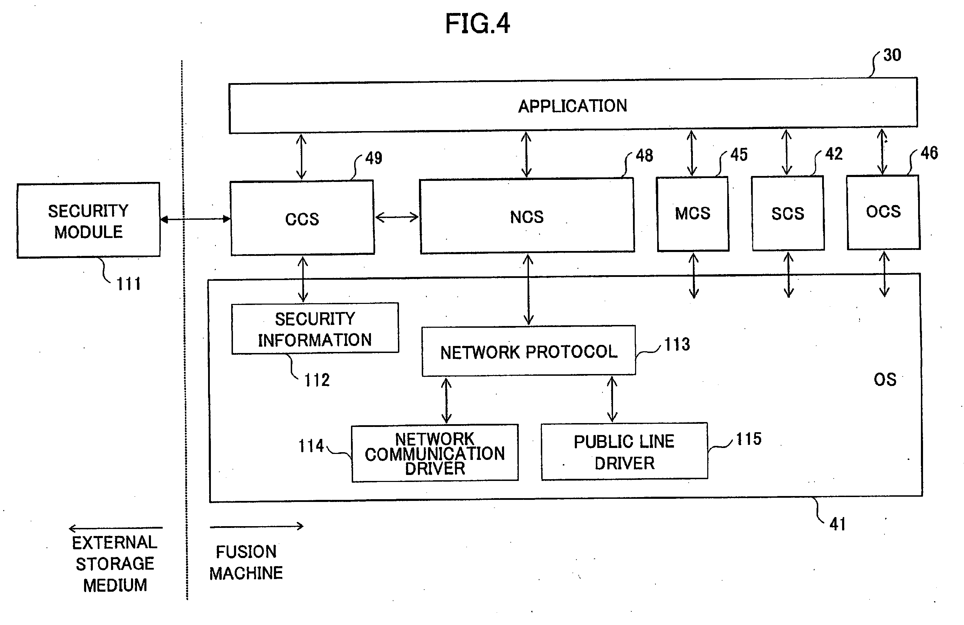

FIG. 4 illustrates one example of processing performed by the fusion machine and the external storage medium. In FIG. 4, software which is not relevant for illustrating the present invention is omitted although it may be included in the external storage medium or the fusion machine.

The OS 41 in the fusion machine 1 is configured to include security information 112, a network protocol 113, a network communication driver 14 and a public line driver 115. The network communication driver 11 controls network communication. The public line driver controls public line (or public circuit) communication. The security information 112 includes key information, a server certificate or such.

The CCS 49 performs data communication with the security module 111 stored in the data part 102 of the external storage medium 100. The CCS 49 also performs data communication with the OS 41, and thus, if necessary, obtains the security information 112 therefrom. The applications 30, SCS 42, MCS 45, OCS 46 and NCS 48 may operate in ways same as those described above with reference to FIG. 1.

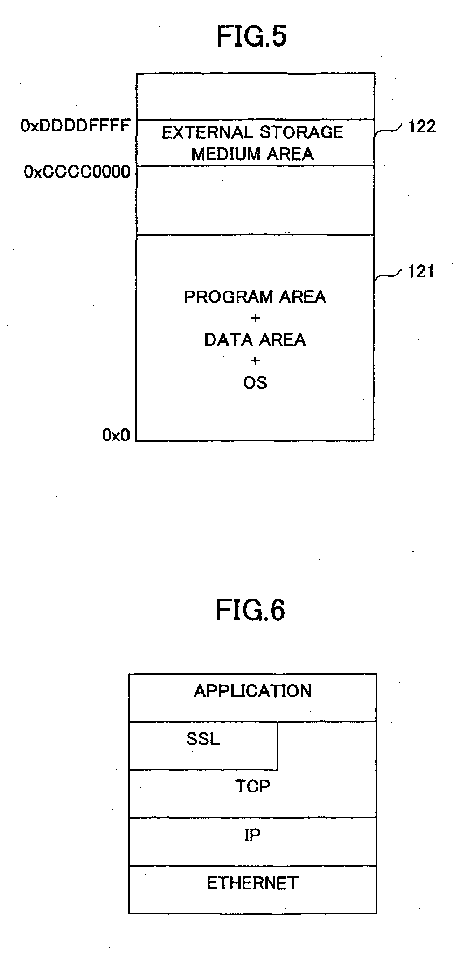

FIG. 5 shows a memory map representing one example of an address space in the fusion machine 1. As shown, in the address space, an area 121 used for software of the applications 30 and the platform 40 of the fusion machine 1 and an external storage medium area 122 used for the security module 111 are set as separate areas, respectively.

FIG. 6 shows a hierarchical configuration of software in the fusion machine 1 in a case where TCP/IP are applied. As shown, the TCP and IP exist in the network protocol 113 of the OS 41, while SSL exits in the security module 111. However, any other protocols may be applied instead.

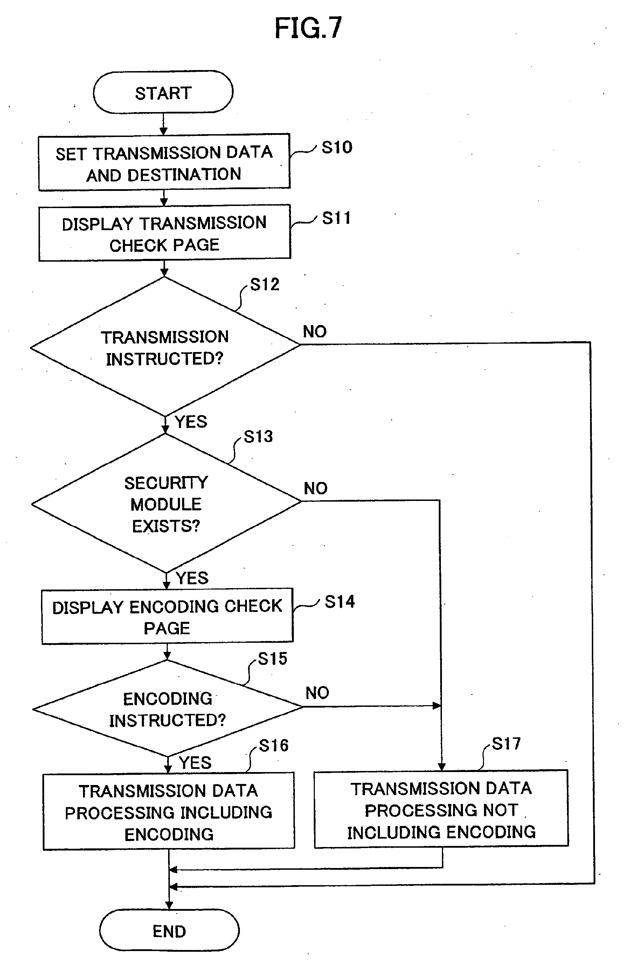

Procedure of transmission/received data processing performed by the fusion machine 1 is described next with reference to figures. FIG. 7 shows a flow chart of one example of transmission data processing performed by the fusion machine 1.

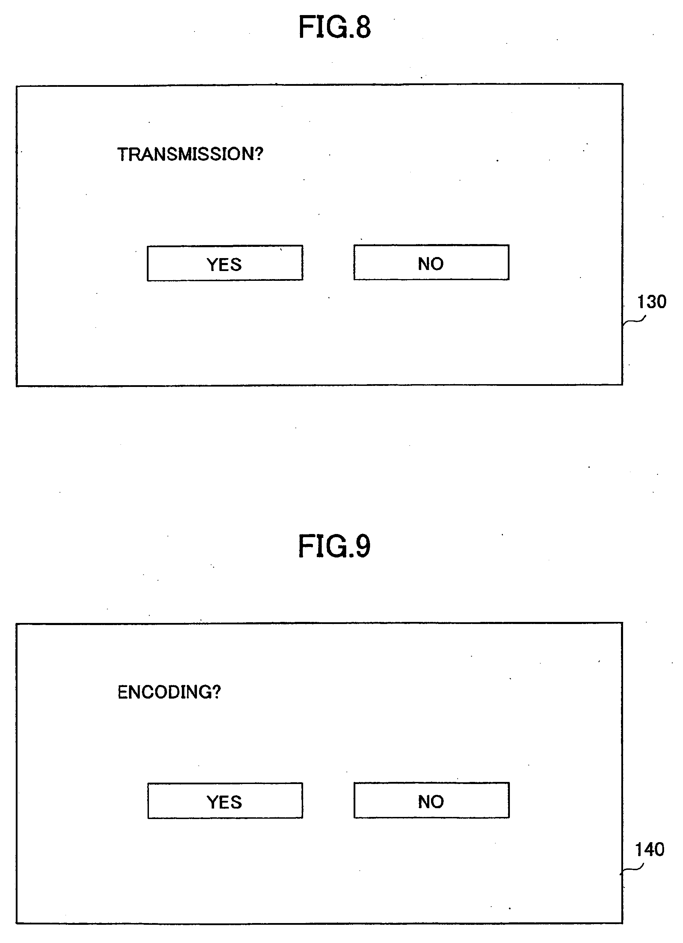

In Step S10, the application 30 has transmission data and a destination (for example an address, a facsimile number or such) therefor set by an operator. The application 30 displays a transmission check page 130 such as that shown in FIG. 8 on the operation panel 80 for example after completing transmission preparation for the transmission data, in Step S11. FIG. 8 illustrates an image diagram of one example of the transmission check page 130.

When the operator wishes to transmit the transmission data,the operator should press a button 'Yes' in the transmission check page 130 whereby relevant instructions are automatically input to the fusion machine 1. On the other hand, when the operator does not wish to transmit the transmission data, the operator should press a button 'No' in the same page 130.

In Step S12, the application 30 determines whether or not the relevant instructions to transmit the transmission data have been effectively input by the operator. When it is determined that the relevant instructions have been input (Yes in Step S12), the application 30 performs Step S13 then. On the other hand, when it is determined that the relevant instructions have not been input (No in Step S12), the application 30 finishes the current processing.

In Step S13, the application 30 inquires the CCS 49 as to whether or not the security module 111 exits. When it is determined that the security module 111 exits (Yes in Step S13, the application 30 then performs Step S14, and displays an encoding check page 140 on the operation panel 80 for example such as that shown in FIG. 9. FIG. 9 shows an image diagram of the encoding check page 140. It is noted that it is determined that the security module exists when the external storage medium having the security module stored therein is loaded in the fusion machine 1 and the security module is connected with the fusion machine as mentioned above, for example.

When the operator wishes to perform encoding, the operator should process a 'Yes' button of the encoding check page 140, and thus, effectively input intrusions to the fusion machine 1 for encoding the transmission data. On the other hand, when the operator does not wishes to encode the transmission data, the operator should press a 'No' button in the same page 140, and thus, effectively does not input the instructions to the fusion machine 1 for encoding the transmission data.

In Step S15, the application 30 determines whether or not the instructions for encoding the transmission data have been effectively input by the operator. When,it is determined that the relevant instructions have been input (Yes in Step S15), the application 30 then performs Step S16. In Step S16, the application 30 executes transmission data processing including encoding the transmission data given. The transmission data processing including encoding the transmission data is described later.

On the other hand, when it is determined that no security module 111 exits (No in Step S13), the application 30 then performs Step S17. When it is determined that no instructions to encode the transmission data have been input (No in Step S15), the application then performs Step S17. In Step S17, the application 30 executes transmission data processing not including encoding the transmission data. The transmission data processing not including encoding the transmission data is also described later.

In the transmission data processing shown in FIG. 7 described above, when the security module 111 exits, as in the example of the hierarchical configuration of software shown in FIG. 6 for example, SSL is inserted between the TCP and the application layer, and the encoded data can be transmitted. When the security module does not exist, SSL is not inserted, and data communication without performing encoding the transmission can be performed.

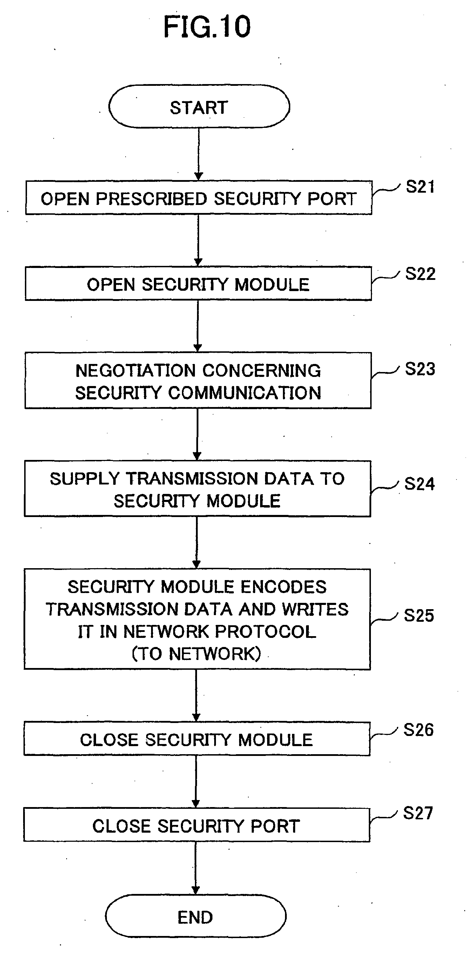

FIG. 10 shows a flow chart of one example of the above-mentioned transmission data processing including encoding operation (Step S16 in FIG. 7). In Step S21, the application 30 causes the NCS 48 to open a prescribed security port. In Step S22, the application 30 causes the CCS 49 to open the security module 111.

In Step S23, the application 30 causes the NCS 48 to perform negotiation concerning security communication with a communication counterpart (for example, another fusion machine, a PC or such).

In Step S24, the application 30 causes the CCS 49 to supply the relevant transmission data to the security module 111, in other words, to write the transmission data in the external storage medium area 122, as long as the given transmission data left unprocessed.

In Step S25, the security module 111 uses the key information or such included in the security information 112, performs encoding the transmission data thus written in the external storage medium area 122, and after that, writes the resulting data in the network protocol 113. The transmission data thus written in the network protocol 113 is then transmitted to the communication network.

When all the transmission data has been thus processed, the application 30 performs Step S26, and causes the CCS 49 to close the security module 111. Then, in Step S27, the application 30 causes the NCS 48 to close the prescribed security port, and the current processing is finished.

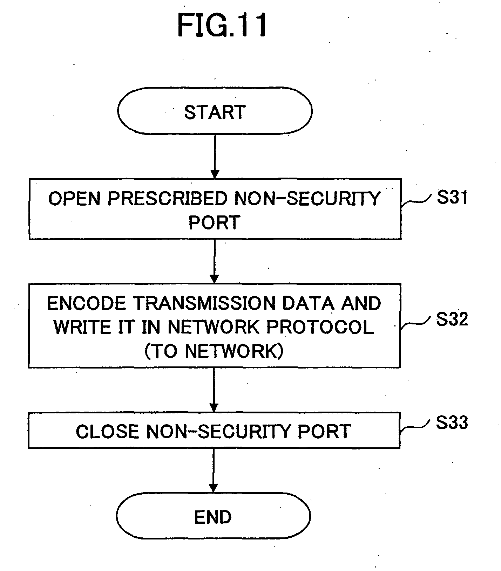

FIG. 11 shows a flow chart of one example of the above-mentioned transmission data processing not including encoding operation (Step S17 in FIG. 7). In Step S31, the application 30 causes the NCS 48 to open a prescribed non-security port. In Step S32, the application 30 causes the NCS 48 to write the transmission data in the network protocol 113 as long as it is left unprocessed. The transmission data thus written in the network protocol 113 is then transmitted to the communication network. When all the transmission data has been thus processed, the application 30 performs Step S33, and causes the CCS 49 to close the security module 111. Then, in Step S27, the application 30 causes the NCS 48 to close the prescribed non-security port, and the current processing is finished.

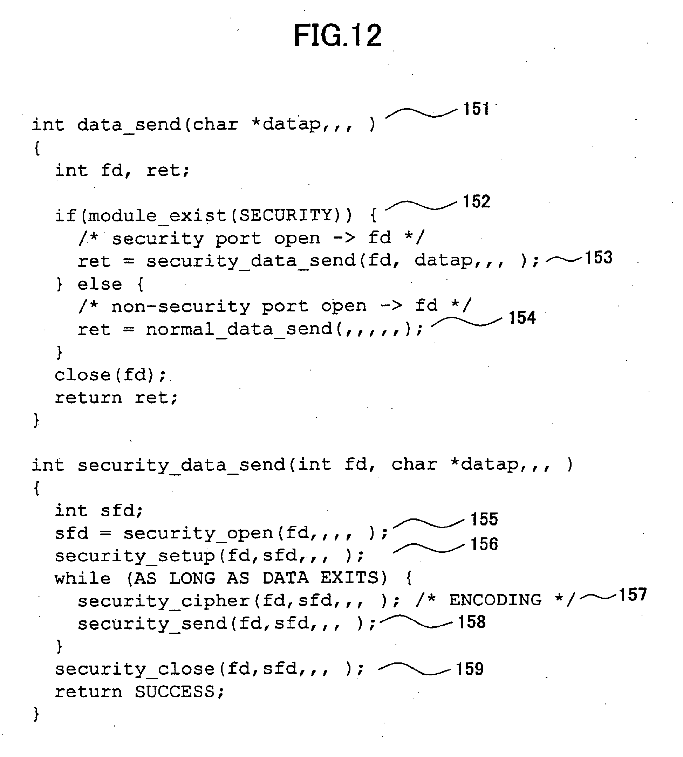

The API which performs the transmission data processing such as that described above with reference to FIG. 7, 10 or 11 may have a configuration shown in FIG. 12. FIG. 12 shows one example of the API used for performing the transmission data processing. The API shown in FIG. 12 is configured to transmit given transmission data with the use of a function 151, i.e., 'data_send ()'.

A function 152, i.e., 'module_exist (SECURITY)', determines whether or not the security module 111 exits, and, when it exits, the function opens the security port and calls a function 153, i.e., 'security_data_send ()'.

When the security module does not exits, the function 152 'module_exist (SECURITY)' opens the non-security port, and calls a function 154, i.e., 'normal data send ()'. For example, in a case where HTTP communication is performed, the number of the security port is '443', while the number of the non-security port is '80'.

All of functions included in the function 153 'security-data_send ()' thus read are APIs. A function 155 'security_open ()' opens the security module 111. A function 156 'security_setup ()' performs setting of internal information before data communication and negotiation with a communication counterpart is performed.

A function 157 'security_cipher ()' performs encoding of the relevant transmission data. A function 158 'security_send ()' actually transmits the transmission data. A function 159 'security_close ()' closes the security module 111.

The API shown in FIG. 12 is provided by the security module 111. Accordingly, the API shown in FIG. 12 can be made independent from a specific protocol or program.

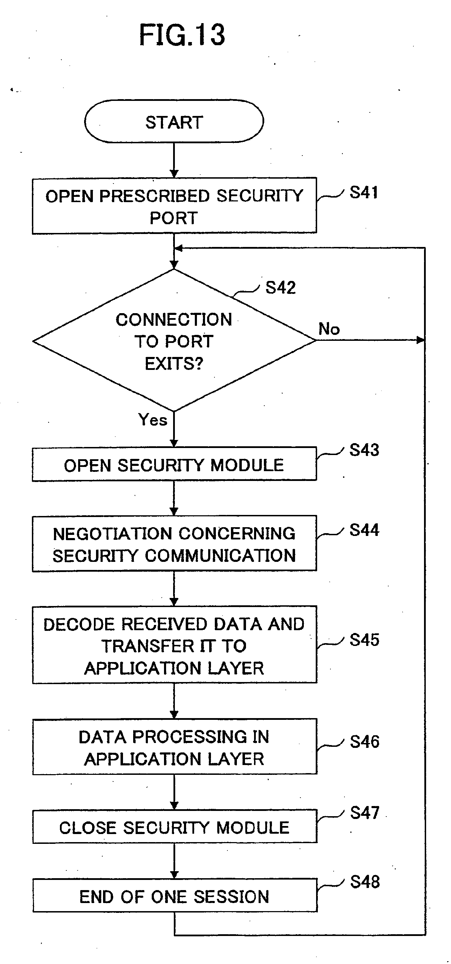

FIG. 13 shows a flow chart of one example of received data processing performed by the fusion machine 1. In Step S41, a protocol daemon resident in the system memory 62, the local memory 67 or such causes the NCS 48 to open a prescribed security port.

In Step S42, the protocol daemon determines whether or not there exists connection with the security port. When there exits no connection with the security port (No in Step S42), the protocol daemon repeats Step S42. When there exists a connection with the security port (Yes on Step S42), the protocol daemon executes Step S43.

In Step S43, the protocol daemon causes the CCS 49 to open the security module 111. In Step S44, the protocol daemon causes the NCS 48 to perform negotiation with a communication counterpart (another fusion machine, a PC or such) concerning security communication.

In Step S45, the protocol daemon causes the CCS 49 to supply received data to the security module 111, in other words, to write the received data in the external storage medium area 122 as long as the received data is left unprocessed The security module 111 uses the key information or such included in the security information 112, performs decoding processing or such on the received data written in the external storage medium area 122, and after that, supplies the resulting data (decoded) to the application 30.

In Step S46, the application 30 performs data processing and other necessary processing on the thus-supplied received data. In Step S47, the protocol daemon causes the CCS 49 to close the security module 111. In Step S48, the protocol daemon disconnects the relevant session, and finishes the session processing. After that, the protocol daemon returns to Step S42.

According to the flow chart shown in FIG. 13, with the use of the security module 111 stored in the external storage medium 100, the received data processing including the decoding processing can be performed.

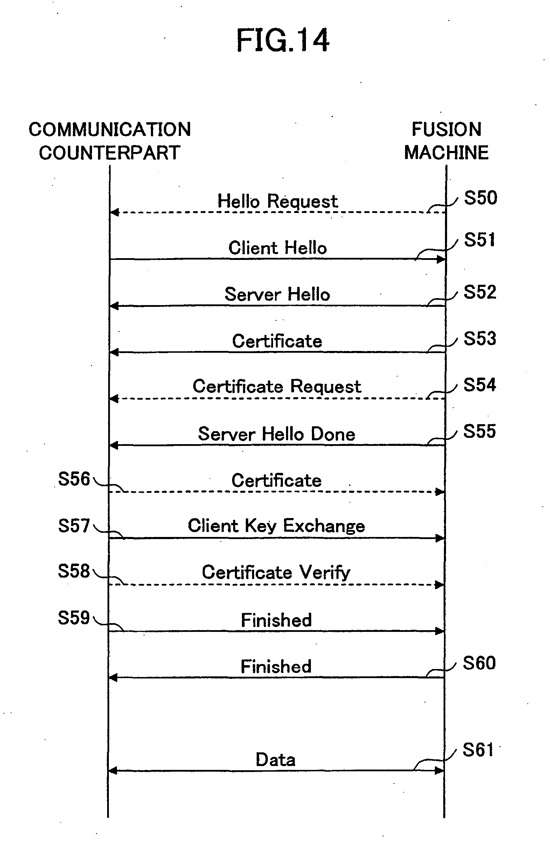

The transmission data processing including the encoding processing shown in FIG. 10 is described next in further detail with reference to figures. First, SSL communication performed between the fusion machine 1 and the communication counterpart is described. FIG. 14 shows a sequence diagram of one example of the SSL communication performed between the fusion machine 1 and the communication counterpart.

In Step S50, when the communication counterpart acting as a client receives information 'Hello Request' from the fusion machine 1 acting as a server, the communication counterpart transmits information 'Client Hello' to the fusion machine 1 in Step S51. Further, in order to connect with the fusion machine 1, the communication counterpart transmits information 'Client Hello' to the fusion machine 1.

In Step S52, the fusion machine 1 transmits information 'Server Hello' to the communication counterpart. With the information thus exchanged, negotiation is performed for a protocol version, a session ID, an encoding method, a compression algorithm, or such concerning the security communication between the fusion machine 1 and the communication counterpart. Further, two random numbers are generated, and are exchanged between the fusion machine 1 and the communication counterpart there.

In Step S53, the fusion machine 1 transmits a server certificate 'Certificate' to the communication counterpart. The fusion machine 1 may instead execute Step S54, transmits a request 'Certificate Request' to the communication counterpart, and thus requests the communication counterpart for a certificate. Then, in Step S55, the fusion machine 1 transmits information 'Server Hello Done' to the communication counterpart.

When the fusion machine 1 transmits the request. 'Certificate Request' to the communication counterpart in Step S54, the communication counterpart executes Step S56 and transmits the relevant certificate 'Certificate' or transmits information indicating that 'it transmits no certificate'.

In Step S57, the communication counterpart uses a public key algorithm selected by means of the above-mentioned information 'Client Hello' and 'Server Hello', and transmits information 'Client Key Exchange' to the fusion machine 1. During transmission of the certificate, the communication counterpart executes Step S58, transmits information 'Certificate Verify' having digital signature attached thereto to the fusion machine 1, and thus, causes the fusion machine 1 to execute verification of the certificate.

In Steps S59 and S60, the fusion machine 1 and the communication counterpart mutually transmit information 'Finished', and thus, mutual authentication is finished. Then, in Step S61, the fusion machine 1 and the communication counterpart then perform data communication for actual contents.

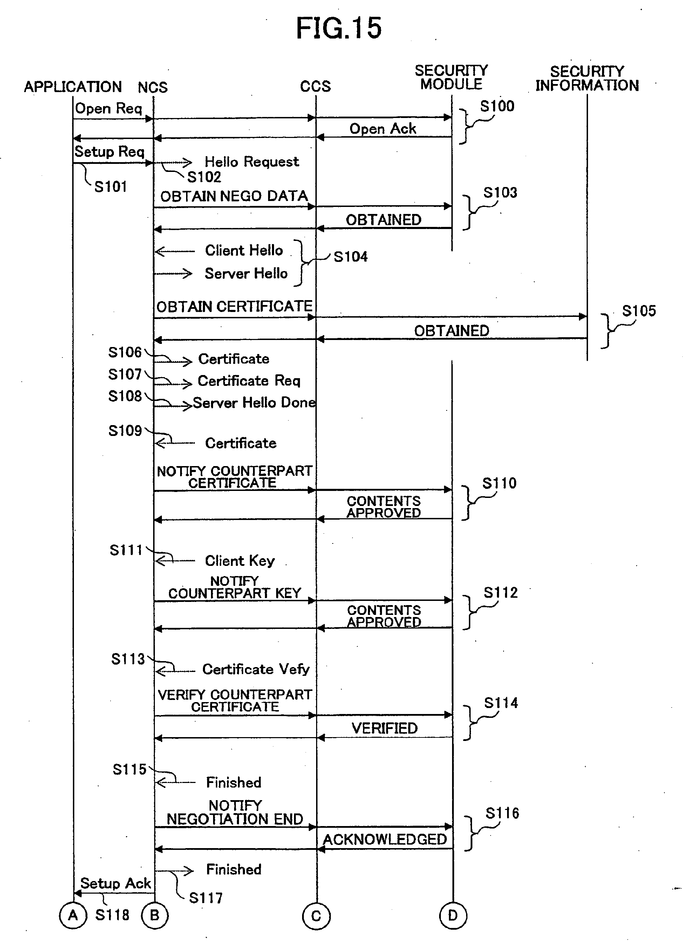

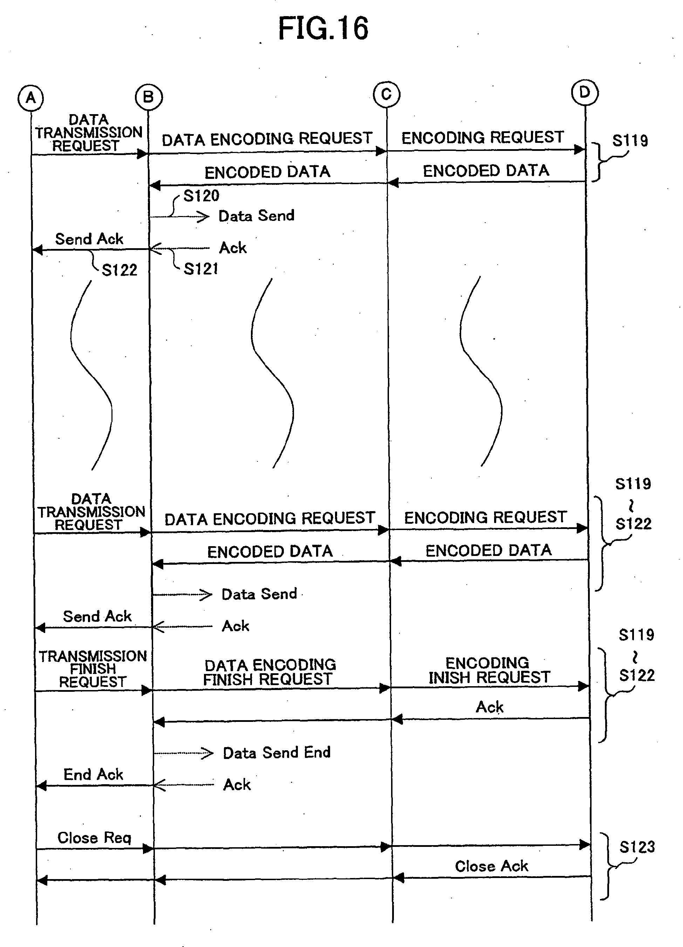

Next, processing performed inside of the fusion machine 1 when the SSL communication is performed between the fusion machine 1 and the communication counterpart is described. FIGS. 15 and 16 show a sequence diagram of one example of processing performed by the fusion machine when the SSL communication is performed.

In Step S100, the application 30 makes request for opening of the security module 111 and makes confirmation of the actual opening by means of the NCS 48 and the CCS 49. In Step S101, the application 30 requests the NCS 48 for negotiation concerning the security communication with the communication counterpart.

In Step S102, the NCS 102 transmits the information 'Hello Request' to the communication counterpart. In Step S103, the NCS 48 accesses the security module 111 by means of the CCS 49, and obtains necessary data such as an encoding method, a compression algorithm or such for the negotiation.

In Step S104, after receiving the information 'Client Hello', the NCS 48 transmits the information 'Server Hello' to the communication counterpart. In Step S105, the NCS 48 accesses the security information 112 inside of the OS 41 by means of the CCS 49, and obtains the server certificate therefrom.

In Step S106, the NCS 48 transmits the server certificate 'Certificate' to the communication counterpart. In the sequence diagram shown in FIG. 15, the NCS 48 executes Step S107, transmits the request 'Certificate Request' to the communication counterpart, and thus requests the communication counterpart for the certificate. In Step S108, the NCS 48 transmits the information 'Server Hello Done' to the communication counterpart.

In Step S109, the NCS 48 receives the certificate 'Certificate' from the communication counterpart. In Step S110, the NCS 48 accesses the security module 111 via the CCS 49, and verifies the certificate of the communication counterpart thus received.

In Step S111, the NCS 48 receives the information 'Client Key Exchange'. In Step S112, the NCS 48 accesses the security module 111 via the CCS 49, and verities the public key of the communication counterpart.

In Step S113, the NCS 48 receives the information 'Certificate Verify' from the communication counterpart. In Step S114, the NCS 48 accesses the security module 111 via the CCS 49, and verifies the certificate of the communication counterpart.

In Step S115, the NCS 48 receives the information 'Finished' transmitted from the communication counterpart. In Step S116, the NCS 48 accesses the security module 111 via the CCS 49, and notifies that negotiation with the communication counterpart is finished.

In Step S117, the NCS 48 transmits the information 'Finished' to the communication counterpart. In Step S118, the NCS 48 notifies the application 30 that the negotiation with the communication counterpart has been finished. Through the processing in Steps S100 through S118, the negotiation between the fusion machine 1 and the communication counterpart is finished, and thus, data communication for the actual contents can be then performed.

In Step S119, the application 30 then requests the NCS 48 to perform data transmission. The NCS 48 accesses the security module 111 via the CCS 49, and causes the security module 111 to encode the transmission data with the use of the key information or such included in the security information 112. After that, the NCS 48 receives the transmission data thus encoded via the CCS 49.

In Step S120, the NCS 48 transmits the encoded transmission data to the communication counterpart. In Step S121, the NCS 48 receives information 'Ack' from the communication counterpart. In Step S122, the NCS 48 notifies the application 30 of data transmission completion.

Through repetition of Steps S119 through S122, the encoded transmission data is transmitted from the fusion machine 1 to the communication counterpart. However, the above-mentioned processing in Steps S119 through S122 is merely an example. Not only the above-mentioned processing in which the information 'Ack' from the communication counterpart is returned to the application 30 but also, depending on a particular protocol applied, other process in which such operation is performed only up to a TCP level may be applied instead.

In Step S123, the application 30 requests the NCS 48 to finish the data transmission. As a result, the NCS 48 accesses the security module 111 via the CCS 49, and notifies it of finish of the encoding operation.

Although not shown in FIG. 16, the NCS 48 transmits information 'Data Send End' to the communication counterpart, and, when information 'Ack' is received from the communication counterpart in response, the NCS 48 transmits information 'End Ack' corresponding to data transmission finish request to the application 30. Thereby, the application 30 closes the security module by means of the NCS 48 and CCS 49. The above-mentioned information 'Data Send End' notifying the communication counterpart of data transmission finish depends on a particular protocol actually applied, and, there may be a case where such information does not exist.

Embodiments of the present invention are not limited to the specific embodiment described above, variation and modification can be made as long as it lies within the scope of the present invention recited in the claims below.

According to the present invention, since the security part (security module 111, for example) is stored in the external storage medium, flexible adaptation to various security strengths or updating of the security part itself is made possible merely by replacement of the recording medium (storage medium).

## Claims

1. A system for secure image data transmission or reception, the system comprising an image processing apparatus (1) connectable with a communication network and an external recording medium (100), wherein:
the image processing apparatus comprises a network interface part (69) for transmitting image data to and receiving image data from the communication network and a connecting part (70) enabling connection with the external recording medium; and
the external recording medium is removably connectable to the connecting part (70) and stores a security part (111) for encoding image data to be transmitted as transmission data to the communication network or decoding received data received from the communication network to image data; wherein:
the image processing apparatus further comprises an operating system (41) that includes security information (112) including key information and a certificate; and
the security part is arranged to access the security information (112) included in the operating system (41) and use the key information for encoding or decoding image data to/from transmission or received data when the external recording medium is connected to the image processsing apparatus.

2. A system according to, further comprising:
a security control part (49) for determining whether or not said external recording medium (100) is connected with said apparatus, and, when it is determined that the external recording medium is connected, causing said security part to encode the transmission data or decode the received data.

3. A system according to claim 1 or 2, further comprising:
a security control part (49) for determining whether or not said external recording medium (100) is connected with said apparatus, and, when it is determined that the external recording medium is not connected, not causing said security part to encode the transmission data or decode the received data, but causing a data transmission/reception part to transmit the transmission data or receive the received data.

4. A system according to any one of claims 1 through 3, further comprising:
an application program interface for causing said security part (111) to encode the transmission data or decode the received data,
wherein said security part (111) is made independent from a predetermined program executed by a data transmission/reception part or by said image processing apparatus.

5. A system according to any one of claims 1 through 4, wherein:
said connecting part (70) comprises a recording medium loading part by which the external recording medium can be loaded in or unloaded from said image processing apparatus.

6. A system according to claim 5, wherein:
said image processing apparatus has a configuration such that a program for performing image processing (32, 33, 34) and a program for performing management of a hardware resource (40) used for the image processing are in a hierarchical configuration.

7. A system according to claim 2, wherein:
when determining that said external recording medium (100) is connected, said security control part (49) further determines according to an instruction from an operator whether or not said security part (111) should encode the transmission data or decode the received data.

8. A method for processing transmission or received data in an image processing apparatus (1) connectable with a communication network and an external recording medium (100) storing a security part (111), the method comprising:
determining whether or not the external recording medium (100) having a security part (111) stored therein for encoding transmission data to be transmitted to the communication network or decoding received data received from the communication network is connected with said image processing apparatus;
causing said security part (111) to encode the image data to transmission data or decode the received data to image data when it is determined that said recording medium is connected; and
transmitting the transmission data or receiving the received data; wherein
in encoding or decoding data, the security part refers to security information (112) included in an operating system (41) of the image forming apparatus (1), the security information (112) including key information and a certificate, and uses the key information to encode the transmission data and decode the received data.

9. A method according to claim 8, further comprising:
not causing said security part to encode the transmission data or decode the received data when it is determined that said external recording medium is not connected, but causing a data transmission/reception part to transmit the transmission data or to receive the reception data.

10. A method according to claim 8 or 9, further comprising, before said determining step:
accepting a transmission request for transmitting the transmission data or a reception request for receiving the received data issued by a predetermined program executed inside or outside of said image processing apparatus (1).

11. A program for processing transmission or received data, the program comprising instructions that, when executed by a computer system, instruct it to function as an image processing apparatus connectable with a communication network, and to effect the steps of the method of any one of claims 8 to 10.

## Patentansprüche

1. System zur sicheren Übertragung oder zum sicheren Empfang von Daten, wobei das System eine Bildverarbeitungsvorrichtung (1) enthält, die mit einem Kommunikationsnetzwerk und einem externen Aufzeichnungsmedium (100) verbindbar ist, wobei:
die Bildverarbeitungsvorrichtung ein Netzwerkschnittstellenteil (69) zum Übertragen der Daten an das und Empfangen der Daten von dem Kommunikationsnetzwerk und ein Verbindungsteil (70), das eine Verbindung mit dem externen Aufzeichnungsmedium ermöglicht, enthält; und
das externe Aufzeichnungsmedium lösbar mit dem Verbindungsteil (70) verbindbar ist und ein Sicherheitsteil (111) zum Kodieren als Übertragungsdaten an das Kommunikationsnetzwerk zu übertragender Bilddaten oder zum Dekodieren von dem Kommunikationsnetzwerk empfangener Daten in Bilddaten speichert bzw. aufnimmt; wobei:
die Bildverarbeitungsvorrichtung ferner ein Betriebssystem (41) enthält, das Sicherheitsinformationen (112) einschließlich Schlüsselinformationen und eines Zertifikats enthält; und
das Sicherheitsteil angeordnet ist, auf die in dem Betriebssystem (41) enthaltenen Sicherheitsinformationen (112) zuzugreifen und die Schlüsselinformationen zum Kodieren oder Dekodieren von Bilddaten in oder aus Übertragungs- oder Empfangsdaten zu nutzen, wenn das externe Aufzeichnungsmedium mit der Bildverarbeitungsvorrichtung verbunden bzw. an die Bildverarbeitungsvorrichtung angeschlossen ist.

2. System gemäß, ferner enthaltend:
ein Sicherheitssteuerteil (49) zum Bestimmen, ob das externe Aufzeichnungsmedium (100) an die Vorrichtung angeschlossen ist, und, wenn bestimmt wird, dass das externe Aufzeichnungsmedium angeschlossen ist, das Sicherheitsteil dazu zu veranlassen, die Übertragungsdaten zu Kodieren oder die empfangenen Daten zu dekodieren.

3. System gemäß Anspruch 1 oder 2, ferner enthaltend:
ein Sicherheitssteuerteil (49) zum Bestimmen, ob das externe Aufzeichnungsmedium (100) an die Vorrichtung angeschlossen ist, und, wenn bestimmt wird, dass das externe Aufzeichnungsmedium nicht angeschlossen ist, das Sicherheitsteil nicht dazu zu veranlassen, die Übertragungsdaten zu Kodieren oder die empfangenen Daten zu dekodieren, aber ein Datenübertragungsteil bzw. Datenempfangsteil dazu zu veranlassen, die Übertragungsdaten zu übertragen oder die empfangenen Daten zu empfangen.

4. System gemäß irgendeinem der Ansprüche 1 bis 3, ferner enthaltend:
eine Anwendungsprogrammschnittstelle, um das Sicherheitsteil (111) dazu zu veranlassen, die Übertragungsdaten zu kodieren oder die empfangenen Daten zu dekodieren, wobei das Sicherheitsteil (111) unabhängig von einem von Datenübertragungsteil bzw. Datenempfangsteil oder der Bildverarbeitungsvorrichtung ausgeführten vorbestimmten Programm gestaltet ist.

5. System gemäß irgendeinem der Ansprüche 1 bis 4, bei der:
das Verbindungsteil (70) ein Aufzeichnungsmediumladeteil enthält, mit dem das externe Aufzeichnungsmedium in die Bildverarbeitungsvorrichtung geladen oder aus ihr ausgeladen werden kann.

6. System gemäß Anspruch 6, bei dem
die Bildverarbeitungsvorrichtung eine Konfiguration hat, in der ein Programm zum Durchführen von Bildverarbeitung (32, 33, 34) und ein Programm zum Durchführen von Verwaltung einer Hardwareressource (40), die zur Bildverarbeitung verwendet wird, sich in einer hierarchischen Konfiguration befinden.

7. System gemäß Anspruch 2, bei dem:
wenn bestimmt wird, dass das externe Aufzeichnungsmedium (100) angeschlossen ist, das Sicherheitssteuerteil (49) ferner gemäß einer Anweisung von einem Bediener bestimmt, ob das Sicherheitsteil (111) die Übertragungsdaten kodieren oder die empfangenen Daten dekodieren soll.

8. Verfahren zum Verarbeiten von Übertragungsdaten oder empfangenen Daten in einer mit einem Kommunikationsnetzwerk und einem externen Aufzeichnungsmedium (100), das ein Sicherheitsteil (111) speichert bzw. aufnimmt, verbindbaren Bildverarbeitungsvorrichtung (1), wobei das Verfahren enthält:
Bestimmen, ob das externe Aufzeichnungsmedium (100), das ein Sicherheitsteil (111) zum Kodieren an das Kommunikationsnetzwerk zu übertragender Übertragungsdaten oder Dekodieren von dem Kommunikationsnetzwerk empfangener Daten aufnimmt, an die Bildverarbeitungsvorrichtung angeschlossen bzw. mit der Bildverarbeitungsvorrichtung verbunden ist;
das Sicherheitsteil (111) wird dazu veranlasst, die Bilddaten in Übertragungsdaten zu kodieren oder die empfangenen Daten in Bilddaten zu dekodieren, wenn bestimmt wird, dass das Aufzeichnungsmedium angeschlossen ist; und
Übertragen der Übertragungsdaten oder Empfangen der empfangenen Daten; wobei
beim Kodieren oder Dekodieren von Daten das Sicherheitsteil auf in einem Betriebssystem (41) der Bildverarbeitungsvorrichtung (1) enthaltene Sicherheitsinformationen (112) zurückgreift, wobei die Sicherheitsinformationen Schlüsselinformationen und ein Zertifikat enthalten, und die Schlüsselinformationen nutzt, um die Übertragungsdaten zu kodieren und die empfangenen Daten zu dekodieren.

9. Verfahren gemäß Anspruch 8, ferner enthaltend:
das Sicherheitsteil wird nicht dazu veranlasst, die Übertragungsdaten zu kodieren oder die empfangenen Daten zu dekodieren, wenn bestimmt wird, dass das externe Aufzeichnungsmedium nicht angeschlossen ist, aber es wird ein Datenübertragungsteil bzw. Datenempfangsteil dazu veranlasst, die Übertragungsdaten zu übertragen oder die Empfangsdaten zu empfangen.

10. Verfahren gemäß Anspruch 8 oder 9, ferner vor dem Bestimmungsschritt enthaltend:
Annehmen einer Übertragungsanfrage zum Übertragen der Übertragungsdaten oder einer Empfangsanfrage zum Empfangen der empfangenen Daten, die von einem vorbestimmten, innerhalb oder außerhalb der Bildverarbeitungsvorrichtung (1) ausgeführten Programm ausgegeben werden.

11. Programm zum Verarbeiten von Übertragungsdaten oder empfangenen Daten, wobei das Programm Anweisungen enthält, die, wenn sie von einem Computersystem ausgeführt werden, es dazu veranlassen, als eine mit einem Kommunikationsnetzwerk verbindbare Bildverarbeitungsvorrichtung zu funktionieren und die Schritte des Verfahrens gemäß irgendeinem der Ansprüche 8 bis 10 zu bewirken.

## Revendications

1. Système pour la transmission ou la réception de données d'image sécurisée, le système comprenant un appareil de traitement d'image (1) qui peut être connecté à un réseau de communication et à un support d'enregistrement externe (100), dans lequel :
l'appareil de traitement d'image comprend une partie d'interface de réseau (69) pour transmettre des données d'image au réseau de communication et recevoir des données d'image de celui-ci et une partie de connexion (70) permettant une connexion au support d'enregistrement externe ; et
le support d'enregistrement externe peut être connecté de manière amovible à la partie de connexion (70) et mémorise une partie de sécurité (111) pour encoder les données d'image à transmettre en tant que données de transmission au réseau de communication ou pour décoder les données reçues qui ont été reçues du réseau de communication en des données d'image ; dans lequel :
l'appareil de traitement d'image comprend en outre un système d'exploitation (41) qui comprend des informations de sécurité (112) comprenant des informations de clé et un certificat ; et
la partie de sécurité est agencée pour accéder aux informations de sécurité (112) incluses dans le système d'exploitation (41) et pour utiliser les informations de clé pour encoder les données d'image en des données de transmission et pour décoder celles-ci en des données reçues lorsque le support d'enregistrement externe est connecté à l'appareil de traitement d'image.

2. Système selon la revendication 1, comprenant en outre :
une partie de contrôle de sécurité (49) pour déterminer si, oui ou non, ledit support d'enregistrement externe (100) est connecté au dit appareil, et, lorsqu'il est déterminé que le support d'enregistrement externe est connecté, pour amener ladite partie de sécurité à encoder les données de transmission ou à décoder les données reçues.

3. Système selon la revendication 1 ou 2, comprenant en outre :
une partie de contrôle de sécurité (49) pour déterminer si, oui ou non, ledit support d'enregistrement externe (100) est connecté au dit appareil, et, lorsqu'il est déterminé que le support d'enregistrement externe n'est pas connecté, pour ne pas amener ladite partie de sécurité à encoder les données de transmission ou à décoder les données reçues, mais pour amener une partie de transmission/réception de données à transmettre les données de transmission ou à recevoir les données reçues.

4. Système selon l'une quelconque des revendications 1 à 3, comprenant en outre :
une interface de programme d'application pour amener ladite partie de sécurité (111) à encoder les données de transmission ou à décoder les données reçues,
dans lequel ladite partie de sécurité (111) est réalisée de manière indépendante d'un programme prédéterminé exécuté par une partie de transmission/réception de données ou par ledit appareil de traitement d'image.

5. Système selon l'une quelconque des revendications 1 à 4, dans lequel :
ladite partie de connexion (70) comprend une partie de chargement de support d'enregistrement par laquelle le support d'enregistrement externe peut être chargé dans ledit appareil de traitement d'image ou déchargé de celui-ci.

6. Système selon la revendication 5, dans lequel :
ledit appareil de traitement d'image a une configuration telle qu'un programme pour effectuer le traitement d'image (32, 33, 34) et un programme pour effectuer la gestion des ressources matérielles (40) utilisées pour le traitement d'image sont dans une configuration hiérarchique.

7. Système selon la revendication 2, dans lequel :
lorsqu'il est déterminé que ledit support d'enregistrement externe (100) est connecté, ladite partie de contrôle de sécurité (49) détermine en outre, conformément à une instruction d'un opérateur, si, oui ou non, ladite partie de sécurité (111) devrait encoder les données de transmission ou décoder les données reçues.

8. Procédé pour le traitement de données de transmission ou reçues dans un appareil de traitement d'image (1) qui peut être connecté à un réseau de communication et à un support d'enregistrement externe (100) mémorisant une partie de sécurité (111), le procédé consistant à :
déterminer si, oui ou non, le support d'enregistrement externe (100) dans lequel une partie de sécurité (111) est mémorisée pour encoder des données de transmission à transmettre au réseau de communication ou pour décoder des données reçues qui ont été reçues du réseau de communication est connecté au dit appareil de traitement d'image ;
amener ladite partie de sécurité (111) à encoder les données d'image en des données de transmission ou à décoder les données reçues en des données d'image lorsqu'il est déterminé que ledit support d'enregistrement est connecté ; et
transmettre les données de transmission ou recevoir les données reçues ; dans lequel
pour l'encodage ou le décodage des données, la partie de sécurité se réfère aux informations de sécurité (112) incluses dans un système d'exploitation (41) de l'appareil de formation d'image (1), les informations de sécurité (112) comprenant des informations de clé et un certificat, et utilise les informations de clé pour encoder les données de transmission et décoder les données reçues.

9. Procédé selon la revendication 8, consistant en outre à :
ne pas amener ladite partie de sécurité à encoder les données de transmission ou à décoder les données reçues lorsqu'il est déterminé que ledit support d'enregistrement externe n'est pas connecté, mais amener une partie de transmission/réception de données à transmettre les données de transmission ou à recevoir les données de réception.

10. Procédé selon la revendication 8 ou 9, consistant en outre, avant ladite étape de détermination, à :
accepter une demande de transmission pour transmettre les données de transmission ou une demande de réception pour recevoir les données reçues émises par un programme prédéterminé exécuté à l'intérieur ou à l'extérieur dudit appareil de traitement d'image (1).

11. Programme pour le traitement de données de transmission ou reçues, le programme comprenant des instructions qui, lorsqu'elles sont exécutées par un système informatique, lui ordonnent de fonctionner en tant qu'appareil de traitement d'image qui peut être connecté à un réseau de communication, et d'effectuer les étapes du procédé selon l'une quelconque des revendications 8 à 10.
